# EUROPEAN PATENT APPLICATION

(11) **EP 4 765 354 A1**
(43) Date of publication of application: **24.06.2026**
(21) Application number: 25222067.8
(22) Date of filing: 10.12.2025
(51) Int. Cl.: H01M 50/103, H01M 50/209

(54) **SECONDARY BATTERY AND SECONDARY BATTERY MODULE INCLUDING THE SAME**

(30) Priority: 13.12.2024 KR 20240186406
(71) Applicant: SAMSUNG SDI CO., LTD., Yongin-si, Gyeonggi-do 17084 (KR)
(72) Inventor: Jung, Hyunwook, 17084 Yongin-si, Gyeonggi-do (KR)
(74) Representative: Meissner Bolte Partnerschaft mbB

(57) **Abstract**

A secondary battery (100) includes an electrode assembly, a case (110) having an opening on at least one side surface, the case (110) accommodating the electrode assembly, and a cap plate (130) coupled to the opening of the case (110), wherein the case (110) includes a weld portion (160) having a curved pattern on at least one surface of the case (110).

## Description

### BACKGROUND

### 1. Field

The present invention includes a secondary battery module including a secondary battery.

### 2. Description Of The Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A secondary battery may be classified into a cylindrical secondary battery, a prismatic secondary battery, or a pouch-type secondary battery, etc., according to the shape of a case. For example, a prismatic secondary battery has a structure in which an electrode assembly is built into a prismatic metal can. An electrode assembly may be inserted into the prismatic metal can, and the can may be sealed by welding a cap plate.

The above information disclosed in this Background section is for enhancement of understanding of the background of the present invention, and therefore, it may contain information that does not constitute related (or prior) art.

### SUMMARY OF THE INVENTION

A secondary battery may include an electrode assembly, a case having an opening, the case accommodating the electrode assembly, and a cap plate coupled to the opening of the case, wherein the case includes a weld portion having a curved pattern on at least one surface of the case.

The weld portion may be on a plate-shaped member bent such that edges thereof face each other and are welded together, and wherein the weld portion extends across from one end to another end of the at least one surface of the case.

The curved pattern of the weld portion may be repeated at a constant period.

The curved pattern of the weld portion may include a plurality of patterns having different periods.

The weld portion may include the curved pattern and a linear pattern.

The weld portion may be on one surface connected to the opening of the case and shares a longer side of the opening.

The weld portion may be in parallel with a longer side of a surface on which is the weld portion.

An amplitude of the curved pattern may be less than half of a short side length of one surface of the case that includes the weld portion.

A period of the curved pattern may be less than half of a long side length of one surface of the case that includes the weld portion.

The present invention includes a secondary battery module, including a cell assembly including a plurality of secondary battery cells at a predetermined interval along a first direction, wherein each of the plurality of secondary battery cells includes an electrode assembly, a case having an opening, the case accommodating the electrode assembly, and a cap plate coupled to the opening of the case, and wherein the case includes a weld portion having a curved pattern on at least one surface of the case.

The secondary battery module may further include a plurality of bus bars extending along the first direction, the plurality of bus bars being on an outer surface of the cell assembly, and a bus bar holder supporting the plurality of bus bars.

The weld portion may be on a surface of the case facing a surface of an adjacent secondary battery cell.

The secondary battery module may further include a plurality of insulation members, at least one of the plurality of insulation members being between adjacent secondary battery cells of the plurality of secondary battery cells.

The predetermined interval between the plurality of secondary battery cells may be greater than or equal to a thickness of each insulation member between the adjacent secondary battery cells.

The secondary battery module may further include a side plate on each of both side surfaces of the cell assembly in the first direction, a circuit board along the first direction, the circuit board being on an outer surface of the bus bar holder, an end plate along the first direction, the end plate being on an outer surface of the circuit board, a top plate on an upper portion of the cell assembly, and a support member between the cell assembly and the side plates.

The weld portion may include at least one of a linear pattern and a curved pattern.

The weld portion may include a weld pattern repeated at a constant period.

The weld portion may include a plurality of weld patterns having different periods.

The weld portion may be on one surface of the case connected to the opening thereof and shares a longer side of the opening.

The weld portion may be in parallel with a longer side of the surface on which is the weld portion.

An amplitude of the curved pattern may be less than half of a short side length of one surface of the case that includes the weld portion.

A period of the curved pattern may be less than half of a long side length of one surface of the case that includes the weld portion.

These and other aspects and features of the present invention will be described in or will be apparent from the following description of embodiments of the present invention.

However, aspects and features of the present invention are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present invention, and further describe aspects and features of the present invention together with the detailed description of the present invention. Thus, the present invention should not be construed as being limited to the drawings.

Features will become apparent to those of ordinary skill in the art by describing in detail exemplary embodiments with reference to the attached drawings, in which:
FIG. 1 is a perspective view illustrating a secondary battery according to an embodiment of the present invention;
FIG. 2 is a cross-sectional view illustrating the secondary battery shown in FIG. 1, cut along an a-a' direction;
FIG. 3 illustrates a curved weld pattern, repeated at a constant period, included in a secondary battery according to an embodiment of the present invention;
FIG. 4 illustrates a curved weld pattern that is a combination of patterns with different periods, included in a secondary battery according to an embodiment of the present invention;
FIGS. 5 and 6 illustrate a combination of a curved weld pattern and a linear weld pattern included in a secondary battery according to an embodiment of the present invention;
FIG. 7 illustrates a curved weld pattern included in a secondary battery according to an embodiment of the present invention;
FIG. 8 illustrates a linear weld pattern included in a secondary battery according to an embodiment of the present invention; and
FIG. 9 illustrates an exploded perspective view of a secondary battery module according to the present invention.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this invention will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Hereinafter, embodiments of the present invention will be described, in detail, with reference to the accompanying drawings. The terms or words used in this specification and claims should not be construed as being limited to the usual or dictionary meaning and should be interpreted as meaning and concept consistent with the technical idea of the present invention based on the principle that the inventor can be his/her own lexicographer to appropriately define the concept of the term to explain his/her invention in the best way.

The embodiments described in this specification and the configurations shown in the drawings are only some of the embodiments of the present invention and do not represent all of the technical ideas, aspects, and features of the present invention. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present invention relates to "one or more embodiments of the present invention." Expressions, such as "at least one of" and "any one of," when preceding a list of elements, modify the entire list of elements and do not modify the individual elements of the list. When phrases such as "at least one of A, B and C," "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are for describing embodiments of the present invention and are not intended to limit the scope of the invention.

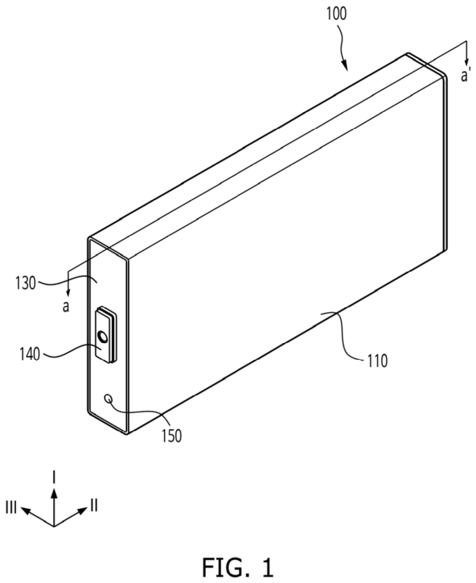

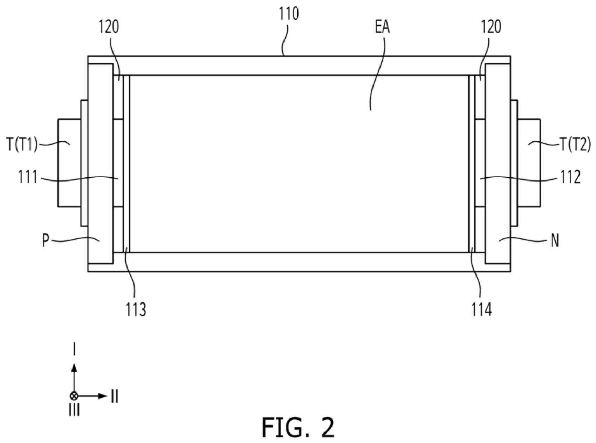

FIG. 1 is a perspective view illustrating a secondary battery 100 according to an embodiment of the present invention. FIG. 2 is a cross-sectional view illustrating the secondary battery 100 shown in FIG. 1, cut along an a-a' direction.

Referring to FIGS. 1 and 2, a secondary battery 100 according to an embodiment of the present invention may include an electrode assembly EA, a case 110 that accommodates the electrode assembly EA and includes an opening 120 on at least one side surface, and a cap plate 130 coupled to the opening 120 of the case 110, and may include a weld portion having a curved pattern formed on at least one surface of the case 110.

In an embodiment, the case 110 may be provided as a side-terminal type case having a pair of the opening 120 with both ends open. For example, the case 110 may have an accommodation space inside, and the electrode assembly EA and an electrolyte may be accommodated in the accommodation space. One of the pair of the opening 120 of the case 110 may be sealed by the cap plate 130, in a state in which the electrode assembly EA and the electrolyte are accommodated, and the other of opening 120 may be sealed by another of the cap plate 130.

In the above-described example, an example of the case 110 including a pair of the opening 120 that are open has been described, but the shape of the case 110 may be of various shapes. For example, the case 110 may have only one side surface open. In this case, the cap plate 130 may seal the open side surface, and the other side surface facing the side surface on which the cap plate is disposed may have an electrode terminal that can be electrically connected to an electrode tab of the electrode assembly.

The case 140 forms an overall external appearance of the secondary battery 100 and may be formed of a metallic material such as stainless steel (SUS), aluminum, an aluminum alloy, or steel plated with nickel. However, this is merely an example, and the case 140 may be composed of various metallic materials that satisfy the strength and shock resistance required of the secondary battery 100.

The opening 120 of the case 110 is sealed by the cap plate 130, for example, by welding, thus isolating the inside of the case 110 from the outside. Accordingly, in order to sufficiently seal the accommodation space of the case, the case 110 and the base plate of the cap plate 130 may be formed of the same material to improve welding quality. For example, the case 110 may be formed of aluminum or an alloy thereof, which has excellent malleability and ductility.

In an embodiment of the present invention, the electrode assembly EA may be provided as a stacked structure that is stacked or wound with a separator, which is an insulator, interposed between a positive electrode plate and a negative electrode plate. The positive electrode plate and the negative electrode plate may include a coated portion in which an active material is applied to a metal foil current collector, and an uncoated portion that is not coated with the active material. The positive electrode of the electrode assembly EA may be connected to a positive electrode lead plate 113 through a positive electrode uncoated portion, and the negative electrode may be connected to a negative electrode lead plate 114 through a negative electrode uncoated portion.

A positive electrode for a rechargeable lithium battery may include a current collector and a positive electrode active material layer on the current collector. The positive electrode active material layer may include a positive electrode active material and may further include a binder and/or a conductive material(e.g., an electrically conductive material).

For example, the positive electrode may further include an additive that can serve as a sacrificial positive electrode.

An amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity(e.g., electrical conductivity) to the electrode. Any material that does not cause chemical change(e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Al may be used as the current collector, but is not limited thereto.

The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity(e.g., electrical conductivity) to the electrode. Any material that does not cause chemical change(e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

The separator may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al2O3, SiO2, TiO2, SnO2, CeO2, MgO, NiO, CaO, GaO, ZnO, ZrO2, Y2O3, SrTiO3, BaTiO3, Mg(OH)2, boehmite, and a combination thereof, but is not limited thereto.

The organic material and the inorganic material may be mixed in one coating layer, or a coating layer including an organic material and a coating layer including an inorganic material may be stacked.

The positive electrode lead plate 113 may include a positive electrode connection plate 111, and a positive electrode terminal T1 of the positive electrode terminal assembly P may be connected to the positive electrode connection plate 111. In addition, the negative electrode lead plate 114 may include a negative electrode connection plate 112, and a negative electrode terminal T2 of the negative electrode terminal assembly N may be connected to the negative electrode connection plate 112.

The electrode assembly EA may be inserted into an accommodation space of the case 110, forming a chemical battery together with an electrolyte. The electrolyte may be injected into the accommodation space in which the electrode assembly EA is placed through an electrolyte inlet 150 of the cap plate 130 that is sealed by welding. The electrolyte may perform ion exchange between the positive electrode and the negative electrode that constitute the electrode assembly EA, thereby generating a continuous flow of current through the positive electrode terminal T1 and the negative electrode terminal T2. After the electrolyte is injected, the electrolyte inlet 150 may be sealed with a sealing member. In FIG. 1, the electrolyte inlet 150 is depicted as being formed in the cap plate 130, but the position of the electrolyte inlet 150 may vary.

In an embodiment of the present invention, the cap plate 130 may be composed of an insulator and a conductor for electrically connecting an electrode terminal T and the electrode assembly EA.

In this embodiment, the cap plate 130 may be provided as a positive electrode terminal assembly P and a negative electrode terminal assembly N which are coupled by welding at both ends of the case 110, thereby sealing the accommodation space of the case 110.

A weld portion may be formed by welding edges of a plate-shaped member that are bent to face each other, and the weld portion may be formed so as to cross from one end to the other end of at least one surface of the case 110 of the secondary battery 100. Specifically, the case 110 of the secondary battery 100 may be formed by bending a plate-shaped member made of a metallic material and then welding the facing edges of the bent plate-shaped member. During the welding process the weld portion may be formed. The weld portion may extend from one end of one surface of the case 110 to the other end opposite thereto.

The secondary battery 100 may be a lithium battery cell, a sodium battery cell, or the like. However, the secondary battery 100 includes all batteries that may repeatedly provide electricity by charging and discharging. In one embodiment, when the secondary battery 100 is a lithium battery cell, it may be used in an electric vehicle (EV) because it has excellent lifespan and high-rate characteristics. For example, it may be used in a hybrid vehicle such as a plug-in hybrid electric vehicle (PHEV). In addition, the lithium battery cell may be used in fields requiring power storage in a variety of ranges, for example, in smartphones, tablet PCs, electric bicycles, electric tools, etc., but may vary.

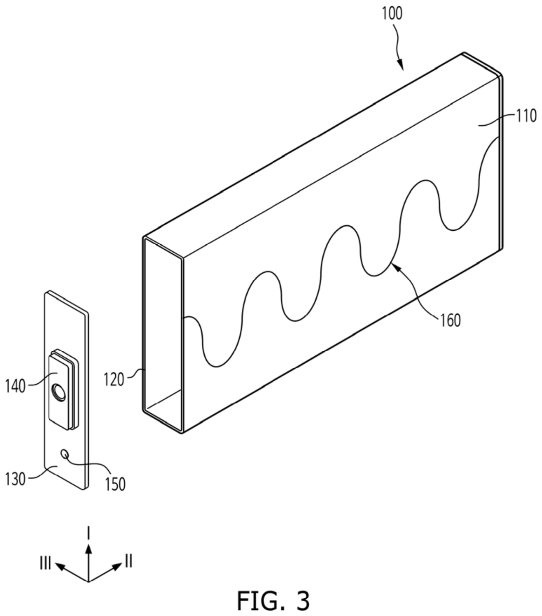

FIG. 3 illustrates a curved weld pattern, repeated at a constant period, included in the secondary battery 100 according to an embodiment of the present invention. The secondary battery 100 shown in FIG. 3 may include the same or a similar configuration as the secondary battery illustrated in FIGS. 1 and 2.

Referring to FIG. 3, a weld portion 160 formed on at least one surface of the case 110 of the secondary battery 100 may be repeated at a constant period as a curved pattern.

Since the weld portion 160 includes a curved pattern, it may have the effect of offsetting the swelling force applied to the case 110 of the secondary battery 100 due to a swelling phenomenon that may occur during charging and discharging of the secondary battery. For example, as shown in FIG. 3, in the weld portion 160 having a curved pattern in which a constant period is repeated while including a sine function-shaped constant curvature, the swelling force generated around a shape that includes a curvature protruding in a first direction (I) may be canceled out by the swelling force generated around a shape that includes a curvature protruding in the 180° opposite direction to the first direction (I), thereby preventing a swelling phenomenon occurring in the weld portion 160.

The weld portion 160 may be formed on one surface that is connected to the opening 120 of the case 110 of the secondary battery 100 and shares the longer side of the opening 120. For example, the weld portion 160 may be formed on one surface having a larger area among the surfaces connected to the opening 120. However, if the weld portion 160 includes a curved pattern repeated at a constant period, it may be formed on any surface of the case 110 of the secondary battery 100.

The weld portion 160 may be formed in parallel with the longer side of the surface on which the weld portion 160 is formed (e.g., in the direction II in the orientation shown). However, if the weld portion 160 includes a curved pattern repeated at a constant period, the direction in which the weld portion 160 is formed may be any direction on one surface of the case 110 of the secondary battery 100. In addition, the weld portion 160 may be formed in the center of the surface on which the weld portion 160 is formed, in parallel with the longer side of that surface. The amplitude of the curved pattern included in the weld portion 160 may be less than half of a short side length of one surface of the case 110 of the secondary battery 100 that includes the weld portion 160.

In addition, the period of the curved pattern included in the weld portion 160 may be less than half of a long side length of one surface of the case 110 of the secondary battery 100 that includes the weld portion 160.

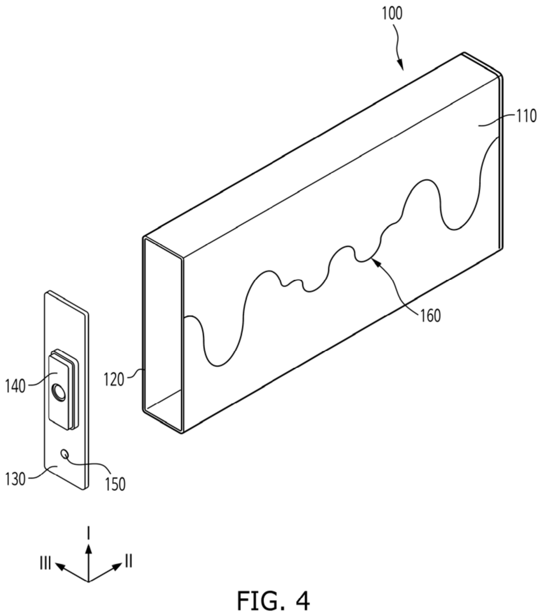

FIG. 4 illustrates a curved weld pattern in which patterns having different periods are combined, included in the secondary battery 100 according to an embodiment of the present invention. The secondary battery 100 shown in FIG. 4 may include the same or a similar configuration as the secondary battery illustrated in FIGS. 1 and 2.

Referring to FIG. 4, a weld portion 160 formed on at least one surface of the case 110 of the secondary battery 100 may be a curved pattern that is a combination of patterns having different periods.

Since the weld portion 160 includes a curved pattern, it may have the effect of offsetting the swelling force applied to the case 110 of the secondary battery 100 due to a swelling phenomenon that may occur during charging and discharging of the secondary battery. For example, even if patterns with different periods are combined as shown in FIG. 4, the swelling force generated around a shape that includes a curvature protruding in a first direction (I) may be canceled out by the swelling force generated around a shape that includes a curvature protruding in the 180° opposite direction to the first direction (I), thereby preventing a swelling phenomenon from occurring in the weld portion 160.

The weld portion 160 may be formed on one surface that is connected to the opening 120 of the case 110 of the secondary battery 100 and shares the longer side of the opening 120. For example, the weld portion 160 may be formed on one surface having a larger area among the surfaces connected to the opening 120. However, if the weld portion 160 includes a curved pattern that is a combination of patterns having different periods, the position of the surface on which the weld portion 160 is formed may be any surface of the case 110 of the secondary battery 100.

The weld portion 160 may be formed in parallel with the longer side of the surface on which the weld portion 160 is formed. However, if the weld portion 160 includes a curved pattern that is a combination of patterns having different periods, the direction in which the weld portion 160 is formed may be any direction on one surface of the case 110 of the secondary battery 100. For example, the weld portion 160 may be formed in the center of the surface on which the weld portion 160 is formed, in parallel with the longer side of that surface. The amplitude of the curved pattern included in the weld portion 160 may be less than half of a short side length of one surface of the case 110 of the secondary battery 100 that includes the weld portion 160, and in FIG. 4, among the patterns having different periods, the pattern with the largest amplitude may be less than half of the short side length of one surface of the case 110 of the secondary battery 100.

In addition, the period of the curved pattern included in the weld portion 160 may be less than half of a long side length of one surface of the case 110 of the secondary battery 100 that includes the weld portion 160. In FIG. 4, there are patterns with different periods, and the pattern having the largest period may be less than half of the long side length of one surface of the case 110 of the secondary battery 100.

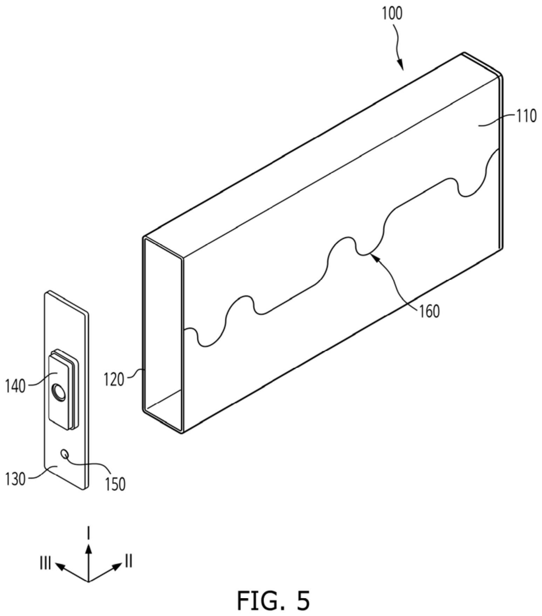

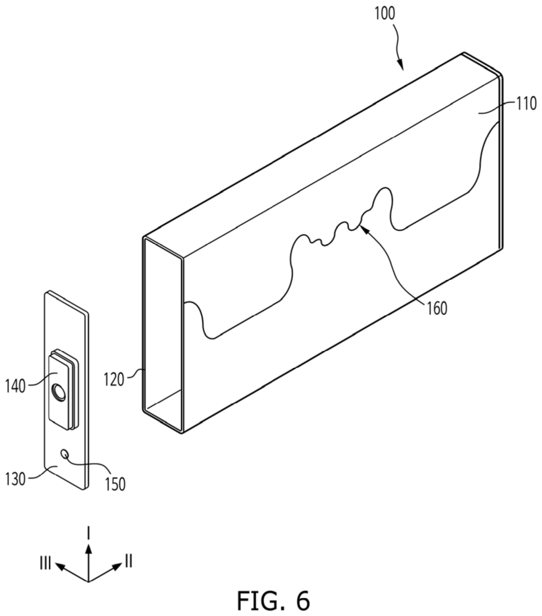

FIGS. 5 and 6 illustrate a combination of a curved weld pattern and a linear weld pattern included in the secondary battery 100 according to an embodiment of the present invention. The secondary battery 100 shown in FIGS. 5 and 6 may include the same or a similar configuration as the secondary battery illustrated in FIGS. 1 and 2.

Referring to FIG. 5, a weld portion 160 formed on at least one surface of the case 110 of the secondary battery 100 may be a combination of a curved weld pattern and a linear weld pattern, and the curved weld pattern may be the same as or similar to the weld pattern of FIG. 3. Referring to FIG. 6, a weld portion 160 formed on at least one surface of the case 110 of the secondary battery 100 may be a combination of a curved weld pattern and a linear weld pattern, and the curved weld pattern may be the same as or similar to the weld pattern of FIG. 4.

Since the weld portion 160 includes a curved pattern and a linear pattern, it may have the effect of offsetting the swelling force applied to the case 110 of the secondary battery 100 due to a swelling phenomenon that may occur during charging and discharging of the secondary battery. For example, since a linear pattern as well as a curved pattern are combined as shown in FIGS. 5 and 6 in the curved pattern portion of the weld portion 160, the swelling force generated around a shape that includes a curvature protruding in a first direction (I) is canceled out by the swelling force generated around a shape that includes a curvature protruding in the 180° opposite direction to the first direction (I), thereby preventing the secondary battery 100 itself from swelling. In addition, when a plurality of the secondary battery 100 are assembled to form a secondary battery module, the swelling force generated from the linear weld pattern of one secondary battery cell may be canceled out by the swelling force generated from the linear weld pattern of an adjacent secondary battery cell, thereby preventing a swelling phenomenon in the weld portion 160.

The weld portion 160 may be formed on one surface that is connected to the opening 120 of the case 110 of the secondary battery 100 and shares the longer side of the opening 120. For example, the weld portion 160 may be formed on one surface having a larger area among the surfaces connected to the opening 120. However, if the weld portion 160 includes a pattern in which a curved pattern and a linear pattern are combined, the position of the surface on which the weld portion 160 is formed may be any surface of the case 110 of the secondary battery 100.

The weld portion 160 may be formed in parallel with the longer side of the surface on which the weld portion 160 is formed. However, if the weld portion 160 includes a pattern that combines a curved pattern and a linear pattern, the weld portion 160 may be formed in any direction on one surface of the case 110 of the secondary battery 100. For example, the weld portion 160 may be formed in the center of the surface on which the weld portion 160 is formed, in parallel with the longer side of that surface. The amplitude of the curved pattern included in the weld portion 160 may be less than half of a short side length of one surface of the case 110 of the secondary battery 100 that includes the weld portion 160. In FIG. 6, the pattern shown therein may include patterns with different periods, and the pattern with the largest amplitude may be less than half of the short side length of one surface of the case 110 of the secondary battery 100.

In addition, the period of the curved pattern included in the weld portion 160 may be less than half of a long side length of one surface of the case 110 of the secondary battery 100 that includes the weld portion 160. The pattern shown in FIG. 6 may include patterns with different periods, and the pattern having the largest period may be less than half of the long side length of one surface of the case 110 of the secondary battery 100.

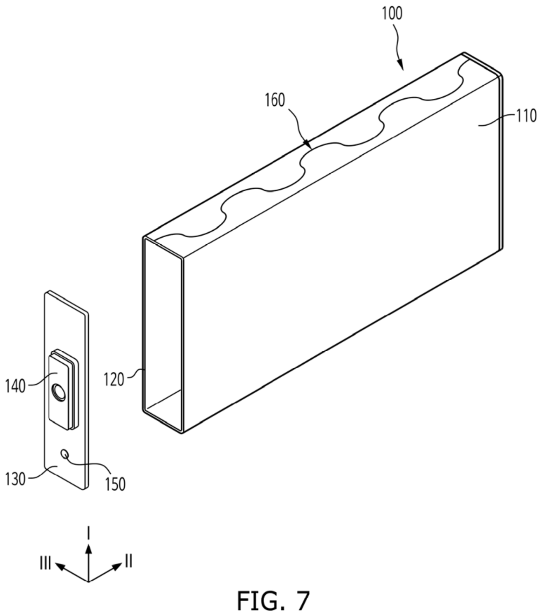

FIG. 7 illustrates a curved weld pattern included in a secondary battery 100 according to an embodiment of the present invention. The secondary battery 100 shown in FIG. 7 may include the same or a similar configuration as the secondary battery illustrated in FIGS. 1 and 2.

Referring to FIG. 7, a weld portion 160 formed on at least one surface of the case 110 of the secondary battery 100 may be a curved pattern repeated at a constant period.

Since the weld portion 160 includes a curved pattern, it may have the effect of offsetting the swelling force applied to the case 110 of the secondary battery 100 due to a swelling phenomenon that may occur during charging and discharging of the secondary battery. For example, as shown in FIG. 7, in the weld portion 160 having a curved pattern in which a constant period is repeated while including a sine function-shaped constant curvature, the swelling force generated around a shape that includes a curvature protruding in a third direction (III) may be canceled out by the swelling force generated around a shape that includes a curvature protruding in the 180° opposite direction to the third direction (III), thereby preventing a swelling phenomenon from occurring in the weld portion 160.

The weld portion 160 may be formed on one surface that is connected to the opening 120 of the case 110 of the secondary battery 100 and shares the shorter side of the opening 120. For example, the weld portion 160 may be formed on one surface having a smaller area among the surfaces in contact with the opening 120. However, the position of the surface on which the weld portion 160 is formed may vary, and if the weld portion 160 includes a curved pattern repeated at a constant period, it may be formed on any surface of the case 110 of the secondary battery 100.

The weld portion 160 may be formed in parallel with the longer side of the surface on which the weld portion 160 is formed. However, if the weld portion 160 includes a curved pattern repeated at a constant period, the direction in which the weld portion 160 is formed may be any direction on one surface of the case 110 of the secondary battery 100. For example, the weld portion 160 may be formed in the center of the surface on which the weld portion 160 is formed, in parallel with the longer side of that surface. The amplitude of the curved pattern included in the weld portion 160 may be less than half of a short side length of one surface of the case 110 of the secondary battery 100 that includes the weld portion 160.

In addition, the period of the curved pattern included in the weld portion 160 may be less than half of a long side length of one surface of the case 110 of the secondary battery 100 that includes the weld portion 160.

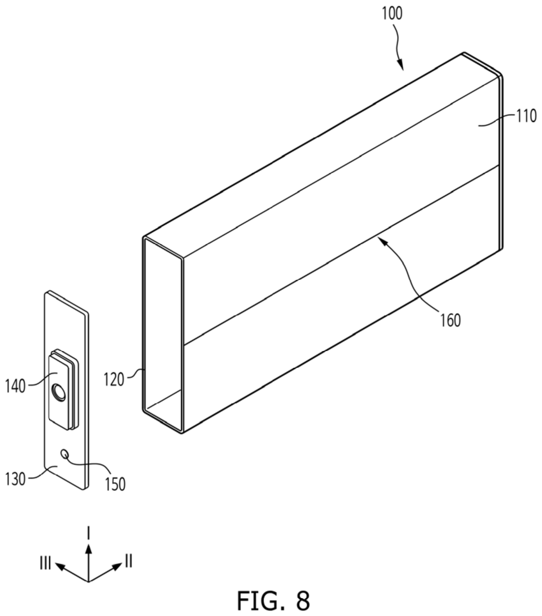

FIG. 8 illustrates a linear weld pattern included in a secondary battery 100 according to an embodiment of the present invention. The secondary battery 100 shown in FIG. 8 may include the same or a similar configuration as the secondary battery illustrated in FIGS. 1 and 2.

Referring to FIG. 8, a weld portion 160 formed on at least one surface of the case 110 of the secondary battery 100 may be formed as a straight line in parallel with the longer side of the surface containing the weld portion 160. However, if the weld portion 160 includes a linear pattern, it may be formed in any direction on one surface of the case 110 of the secondary battery 100. For example, the weld portion 160 may be formed in the center of the surface in parallel with the longer side of that surface.

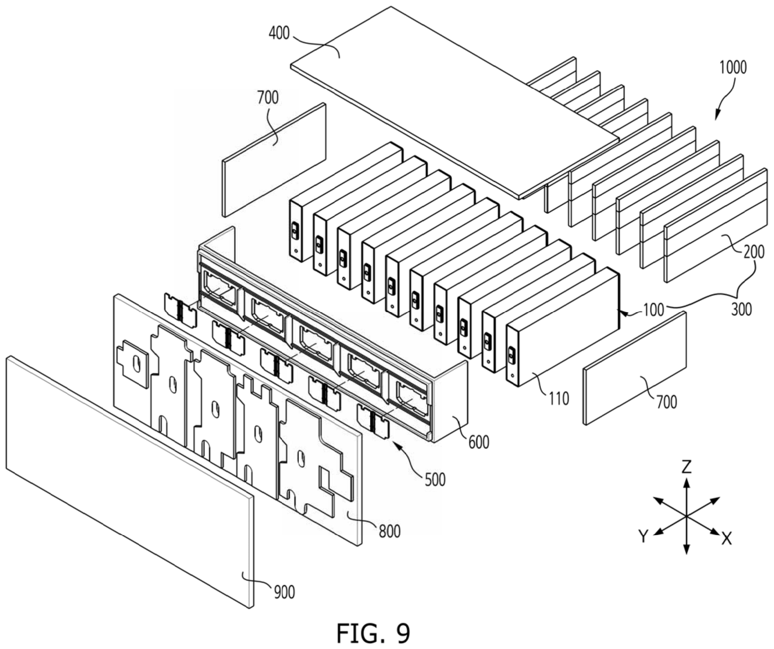

FIG. 9 illustrates an exploded perspective view of a secondary battery module 1000 according to the present invention.

The secondary battery module 1000 shown in FIG. 9 may include a plurality of the secondary battery 100 that are substantially the same as the secondary battery 100 shown in FIGS. 1 to 8. Accordingly, in the secondary battery module shown in FIG. 9, the same reference numerals are used for the same components as those in FIGS. 1 to 8, and further detailed description of those components will be omitted.

Referring to FIG. 9, the secondary battery module 1000 according to an embodiment of the present invention include a cell assembly 300 that includes a plurality of the secondary battery 100 arranged along a first direction X at predetermined intervals, a plurality of the plurality of bus bars 500 extending along the first direction X and disposed on an outer surface of the cell assembly 300 in a second direction Y, and a bus bar holder 600 supporting the plurality of the plurality of bus bars 500.

Each of the plurality of the secondary battery 100 may include an electrode assembly, a case 110 that accommodates the electrode assembly and includes an opening 120 on at least one side surface, and a cap plate 130 coupled to the opening 120 of the case 110. The case 110 may include a weld portion 160, and the surface of the case 110 where the weld portion 160 is formed may be arranged to face the surface of an adjacent secondary battery 100. Here, the weld portion 160 may be as described with reference to FIGS. 1 to 8.

The secondary battery module 1000 may further include a side plate 700 disposed on both side surfaces of the cell assembly 300 in the first direction X, a circuit board 800 extending along the first direction X and disposed on an outer surface of the bus bar holder 600, an end plate 900 extending along the first direction X and disposed on an outer surface of the circuit board 800, a top plate 400 disposed on an upper portion of the cell assembly 300, and a support member disposed between the cell assembly 300 and the side plate 700.

The plurality of the secondary battery 100 may be arranged in one direction so that the wide outer surfaces of each case 110 face each other, and the cell assembly 300, i.e., the plurality of the secondary battery 100, may be surrounded and supported by the side plate 700, the end plate 900, the top plate 400, and a bottom plate beneath the plurality of the secondary battery 100.

Here, the cell assembly 300 of the secondary battery module 1000 may further include a plurality of insulation members 200 disposed between the plurality of the secondary battery 100. In addition, the predetermined interval between the plurality of the secondary battery 100 may be greater than or equal to the thickness of each insulation member of the plurality of insulation members 200 disposed between the plurality of the secondary battery 100. With this configuration, when a plurality of the secondary battery 100 are assembled to form a secondary battery module, the swelling force generated from a linear and/or curved weld pattern of one cell may be canceled out by the swelling force generated from the weld pattern of an adjacent cell, thereby preventing a swelling phenomenon in the weld portion 160.

The bus bar holder 600 may be disposed on the cap plate 130 and may support the plurality of the plurality of bus bars 500. For example, the bus bar holder 600 may be a roughly rectangular plate, and may be made of an insulating material.

A plurality of through holes may be formed in the bus bar holder 600 so that positive and negative electrode terminals of the cap plate 130 are exposed. The bus bar holder 600 may have through holes through which the positive electrode terminals and the negative electrode terminals are exposed, and the plurality of bus bars 500 may be electrically connected to the exposed positive and negative electrode terminals.

The plurality of bus bars 500 may electrically connect the positive electrode terminals and the negative electrode terminals. The plurality of bus bars 500 may connect the plurality of the secondary battery 100 in series and/or parallel. To this end, a plurality of bus bars may be provided. According to an embodiment of the present invention, the bus bars may electrically connect a positive electrode terminal of one secondary battery 100 to a positive electrode terminal or a negative electrode terminal of another secondary battery 100. Additionally or in other embodiments, the bus bars may electrically connect a negative electrode terminal of one secondary battery 100 to a positive electrode terminal or a negative electrode terminal of another secondary battery 100. The bus bars may be connected to the positive and/or negative electrode terminals by methods such as welding. Regions of the secondary battery 100 other than the positive and negative electrode terminals may be insulated from the plurality of bus bars 500 by the bus bar holder 600. A circuit board 800 may be interposed between the plurality of bus bars 500 and the end plate 900, and the plurality of bus bars 500 may be electrically connected to the circuit board 800.

The circuit board 800 may have various components for measuring status information of the secondary battery cells 100, such as the voltage and/or temperature of the secondary battery cells 100, and various components or circuits for controlling and/or managing the secondary battery cells 100. According to an embodiment of the present invention, the circuit board 800 may include a battery management system (BMS). According to an embodiment of the present invention, the circuit board 800 may be electrically connected to the outside of the secondary battery module 1000 via a separate connector.

The circuit board 800 may be in a rectangular shape, and may be arranged so that its longer side direction aligns with the arrangement direction of the plurality of the secondary battery 100 (i.e., the X direction). Since the circuit board 800 needs to be connected to the plurality of bus bars 500, it may be sized such that it covers at least a certain area of the bus bar holder 600. The circuit board 800 may have a size sufficient to be adjacent to at least the installation area of the bus bar 500 for smooth connection with the bus bar 500. The circuit board 800 may be located on an outer surface of the bus bar holder 600.

The prismatic secondary battery has been manufactured by welding a cap plate to a metal can, which has the advantage of a low manufacturing cost for the metal can; however, there was a problem in that a weld portion in the longer side direction of the cap plate and the metal can breaks due to a swelling phenomenon of the battery cell that occurs during charging or discharging of the battery.

Accordingly, there is a need for a technology that may prevent a weld portion from breaking due to a swelling phenomenon caused by charging and discharging of the battery, while manufacturing a secondary battery at a lower cost.

According to some embodiments of the present invention, by forming a weld portion having a curved pattern in a bent-type case used as the case of a secondary battery, it is possible to prevent breakage of the weld portion of a metal can caused by a swelling phenomenon that may occur during charging and discharging of the secondary battery, and to manufacture a secondary battery with improved energy density and cooling efficiency at a lower cost.

According to some embodiments of the present invention, by forming a weld portion on one surface of the case of each of a plurality of secondary battery cells included in a secondary battery module and arranging the weld portions of adjacent secondary battery cells so as to face each other, the force caused by swelling that occurs during charging and discharging of the secondary battery may be canceled out, thereby preventing a swelling phenomenon of the secondary battery cells.

Although the present invention has been described above with respect to embodiments thereof, the present invention is not limited thereto. Various modifications and variations can be made thereto by those skilled in the art within the spirit of the present invention and the equivalent scope of the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the spirit and scope of the present invention as set forth in the following claims.

## Claims

1. A secondary battery module (1000), comprising:
a cell assembly (300) including a plurality of secondary battery cells (100) at a predetermined interval along a first direction (X),
wherein each of the plurality of secondary battery cells (100) comprises:
an electrode assembly;
a case (110) having an opening, the case (110) accommodating the electrode assembly; and
a cap plate (130) coupled to the opening of the case (110), and
wherein the case (110) comprises a weld portion (160) having a curved pattern on at least one surface of the case (110).

2. The secondary battery module (1000) according to claim 1, wherein the weld portion (160) being on a surface of the case (110) facing a surface of an adjacent secondary battery cell (100).

3. The secondary battery module (1000)according to claim 1 or 2, wherein the weld portion (160) is on a plate-shaped member bent such that edges thereof face each other and are welded together, and wherein the weld portion (160) extends across from one end to another end of the at least one surface of the case (110).

4. The secondary battery module (1000) according to any of the preceding claims, wherein the curved pattern of the weld portion (160) is repeated at a constant period.

5. The secondary battery module (1000) according to any of the preceding claims, wherein the curved pattern of the weld portion (160) includes a combination of patterns having different periods.

6. The secondary battery module (1000) according to any of the preceding claims, wherein the weld portion (160) comprises the curved pattern and a linear pattern.

7. The secondary battery module (1000) according to any of the preceding claims, wherein the weld portion (160) is on one surface connected to the opening of the case (110) and shares a longer side of the opening.

8. The secondary battery module (1000) according to any of the preceding claims, wherein the weld portion (160) is in parallel with a longer side of a surface on which is the weld portion (160).

9. The secondary battery module (1000) according to any of the preceding claims, wherein an amplitude of the curved pattern is less than half of a short side length of one surface of the case (110) that includes the weld portion (160).

10. The secondary battery module (1000) according to any of the preceding claims, wherein a period of the curved pattern is less than half of a long side length of one surface of the case (110) that includes the weld portion (160).

11. The secondary battery module (1000) according to any of the preceding claims, further comprising a plurality of insulation members (200), at least one of the plurality of insulation members (200) being between adjacent secondary battery cells (100) of the plurality of secondary battery cells (100).

12. The secondary battery module (1000) according to claim 11, wherein the predetermined interval between the plurality of secondary battery cells (100) is greater than or equal to a thickness of each insulation member (200) between the adjacent secondary battery cells (100).

13. The secondary battery module (1000) according to any of the preceding claims, further comprising:
a plurality of bus bars (500) extending along the first direction (X), the plurality of bus bars (500) being on an outer surface of the cell assembly; and
a bus bar holder (600) supporting the plurality of bus bars (500).

14. The secondary battery module (1000) according to claim 13, further comprising:
a side plate (700) on each of both side surfaces of the cell assembly in the first direction (X);
a circuit board (800) along the first direction (X), the circuit board (800) being on an outer surface of the bus bar holder (600); and
an end plate (900) along the first direction (X), the end plate (900) being on an outer surface of the circuit board (800).

15. The secondary battery module (1000) according to claim 14, further comprising:
a top plate (400) on an upper portion of the cell assembly; and
a support member between the cell assembly and the side plates (700).
